# EUROPÄISCHE PATENTSCHRIFT

(11) **EP 3 084 091 B1**
(45) Veröffentlichungstag und Bekanntmachung des Hinweises auf die Patenterteilung: **28.02.2018**
(21) Anmeldenummer: 14820753.3
(22) Anmeldetag: 22.12.2014
(51) Int. Cl.: E04B 1/80, E04B 1/74

(54) **WÄRMEDÄMMPLATTE**
THERMAL INSULATION PANEL
PANNEAU D'ISOLATION THERMIQUE

(30) Priorität: 20.12.2013 DE 102013021703; 29.01.2014 DE 102014101056; 12.02.2014 DE 102014101707
(43) Veröffentlichungstag der Anmeldung: 26.10.2016
(73) Patentinhaber: Interbran Systems AG, 76131 Karlsruhe (DE)
(72) Erfinder: BÜTTNER, Siegmar, D-68519 Viernheim (DE); SCHÜMCHEN, Kurt, D-53949 Dahlem (DE)
(74) Vertreter: Von Rohr Patentanwälte Partnerschaft mbB
(86) Internationale Anmeldenummer: PCT/EP2014/003461
(87) Internationale Veröffentlichungsnummer: WO 2015/090616

(56) Entgegenhaltungen:
- EP-A2- 2 522 785
- WO-A1-2012/076492
- DE-A1-102011 113 287
- DE-U1-202011 050 487
- FR-A1- 2 936 583
- US-A1- 2003 077 438

## Beschreibung

Die vorliegende Erfindung betrifft das technische Gebiet der Wärmedämmung, insbesondere der Wärmedämmung von Gebäuden.

Die vorliegende Erfindung betrifft ein Wärmedämmverbundsystem (WDVS), welches eine Wärmedämmplatte sowie ein Dämmputzsystem aufweist.

Während die Wärmedämmung von Gebäuden bis in die 80er Jahre des 20. Jahrhunderts bei Neubau und Erwerb von Immobilien als nachrangig angesehen wurde, rückt sie aufgrund steigender Energiepreise, eines geschärften Umweltbewusstseins und nicht zuletzt aufgrund gesetzgeberischer Maßnahmen, wie beispielsweise der Energieeinsparverordnung (EnEV), zunehmend in den Fokus.

Die Dämmung von Neu- und Altbauten erfolgt dabei überwiegend durch eine sogenannte Außendämmung, d. h. die Außenseiten der Gebäude werden mit Dämmstoffen ausgerüstet.

Üblicherweise werden für die Wärmedämmung bevorzugt Wärmedämmverbundsysteme (WDVS) eingesetzt, welche aus einem plattenförmigen Dämmmaterial, einer außenseitig darauf angebrachten Armierungsschicht, bestehend aus einem Armierungsmörtel sowie einem Armierungsgewebe und einem Oberputz, aufgebaut sind. Die Dämmplatten sind üblicherweise auf Basis von Kunststoffen, insbesondere Polystyrol-Hartschäumen (PS), wie beispielsweise Polystyrol-Partikelschaum (EPS) oder Polystyrol-Extruderschaum (XPS), oder auf Basis von Polyurethan-Hartschäumen (PUR) ausgebildet. Wärmeverbundsysteme auf Grundlage der vorgenannten Kunststoffdämmplatten besitzen unter Idealbedingungen hervorragende Dämmeigenschaften, haben jedoch den Nachteil, dass sie eine Dampfsperre bilden und Feuchtigkeit aus dem Mauerwerk nicht an die Umgebung abgegeben werden kann, was oftmals zur Bildung von Schimmel und Algen führt. Darüber hinaus steigert die Feuchtigkeit die Wärmeleitfähigkeit des Systems, weshalb die theoretischen Wärmedurchgangskoeffizienten (U-Werte) gemäß EN ISO 6946 in der Praxis oftmals nicht erreicht werden.

Darüber hinaus besitzen derartige Wärmedämmverbundsysteme (WDVS) Dicken von 15 bis 20 cm, um eine ausreichende Wärmedämmung zu erreichen, was oftmals zu einer optischen Verschlechterung der gedämmten Fassade und einem reduzierten Lichteinfall ins Innere des Gebäudes durch die Fenster führt. Zur Reduzierung der Dicke der Wärmeverbundsysteme (WDVS) werden in jüngster Zeit zunehmend Vakuumdämmplatten, sogenannte Vakuum-Isolationspaneele (VIP), eingesetzt, welche eine effektive Wärmedämmung mit Wärmedämmverbundsystemen einer Dicke von ca. 10 cm erlauben. Aber auch diese Wärmedämmverbundsysteme weisen den entscheidenden Nachteil, dass sie nicht diffusionsoffen sind, d. h. Feuchtigkeit aus dem Mauerwerk nicht an die Umgebung abgegeben werden kann.

Den alternativ eingesetzten diffusionsoffenen Dämmstoffen, beispielsweise auf Basis von Mineralwolle oder natürlichen organischen Fasern, wie Holz-, Kork-, Hanf- und Schilffasern, fehlt hingegen oftmals die notwendige mechanische Stabilität und strukturelle Integrität; diese Systeme sind vielmehr flexibel und nicht formstabil ausgebildet. Darüber hinaus besitzen diese Systeme gegenüber Kunststoffplatten bzw. Vakuumdämmplatten eine deutlich geringere Dämmwirkung.

Sämtlichen Wärmedämmverbundsystemen, welche auf organischen Polymeren basieren bzw. organische Naturstoffe enthalten, ist gemein, dass sie brennbar sind und zur Verminderung der Brennbarkeit bzw. Entflammbarkeit im Allgemeinen mit speziellen Chemikalien behandelt werden müssen, was jedoch wiederum oftmals mit einer erhöhten Umweltbelastung und Gesundheitsgefährdung einhergeht.

Darüber hinaus werden auch Dämmputze, welche ein Bindemittel sowie wärmedämmende Zuschläge enthalten, eingesetzt. Derartige Dämmputze sind im Regelfall diffusionsoffen, d. h. Feuchtigkeit aus dem Mauerwerk kann an die Umgebung abgegeben werden, jedoch sind die Dämmwirkung sowie die mechanische Belastbarkeit derartiger Dämmputze gegenüber Wärmedämmverbundsystemen deutlich herabgesetzt, was den Einsatz von Wärmedämmputzen auf wenige Anwendungsfälle beschränkt.

Es hat daher im Stand der Technik nicht an Versuchen gefehlt, die vorhandenen Dämmsysteme zur Wärmedämmung von Gebäuden zu verbessern:

So betrifft beispielsweise die DE 10 2012 101 931 A1 ein Fassadendämmsystem mit einer Unterkonstruktion in Holzständerbauweise, einer aus Mineralwollplatten gebildeten Dämmlage und einer Putzschicht, wobei auf der Dämmlage ein Trägergewebe vorliegt, welches der Dämmung eine erhöhte mechanische Belastbarkeit verleihen soll.

Weiterhin betrifft die DE 10 2010 029 513 A1 eine Wärmedämmpulvermischung, welche zu Wärmedämmformkörpern verarbeitet wird und aus einer Mischung von Kieselsäure und mindestens einem Fasermaterial besteht.

Die DE 10 2011 109 661 A1 betrifft eine Dämmstoffplatte sowie eine spezielle Anordnung mehrerer Dämmstoffplatten an einer Gebäudewand, welche mittels eines kapillaraktiven Klebstoffs zur Feuchtigkeitsregulierung verbunden sind.

Während die vorgenannten Systeme einzelne Aspekte der gängigen Wärmedämmsysteme zumindest punktuell verbessern können, ermöglichen sie jedoch nicht, die prinzipiellen Nachteile der gängigen Wärmedämmsysteme auszuräumen.

Darüber hinaus wird gleichsam versucht, die Effizienz von Wärmedämmsystemen durch Einsatz spezieller Materialien zu verbessern. Insbesondere wird versucht, Aerogele in Dämmstoffe bzw. Dämmstoffsyteme einzuarbeiten, um deren Dämmwirkung zu erhöhen. Aerogele sind hochporöse Festkörper, die zu mehr als 90 Vol.-% aus Poren bestehen. Aufgrund der extrem hohen Porosität eignen sich Aerogele zumindest theoretisch in hervorragender Weise zur Wärmedämmung und besitzen Wärmeleitfähigkeitszahlen λ im Bereich von 0,012 bis 0,020 W/(mK). Die üblicherweise für Dämmzwecke eingesetzten Aerogele bestehen aus Siliziumdioxid bzw. kondensierter Kieselsäure und werden durch Sol-Gel-Verfahren aus Silikaten gewonnen. Neben den guten Wärmedämmeigenschaften zeichnen sich Aerogele weiterhin durch eine gute Schallisolierung sowie Nichtbrennbarkeit aus. Bedingt durch die hohe Porosität besitzen Aerogele jedoch nur eine äußerst geringe mechanische Stabilität und werden selbst bei geringen mechanischen Belastungen zerstört.

Aufgrund der guten Wärmedämmeigenschaften von insbesondere silikatbasierten Aeorgelen sind trotzdem zahlreiche Versuche unternommen worden, Aerogele in Dämmstoffe einzubauen. Unter anderem wird Aerogel in Dämmplatten aus Steinwolle eingearbeitet; ein entsprechendes Produkt ist unter der Handelsbezeichnung Aerowolle® kommerziell erhältlich.

Darüber hinaus wurden auch Versuche unternommen, Aerogele in Dämmputze einzuarbeiten, wobei sich jedoch speziell die maschinelle Verarbeitbarkeit, insbesondere der Auftrag des Dämmputzes mittels Putzmaschinen, als schwierig herausstellt, da die fragilen Aerogelpartikel bei der Aufbringung auf die Gebäudewand unter Druck üblicherweise zerstört werden.

Die DE 10 2011 119 029 A1 betrifft einen Dämmstoff zur Herstellung eines Dämmelementes, wobei der Dämmstoff Aerogelpartikel und wenigstens ein anorganisches bzw. organisches Bindemittel enthält. Der Bindemittelanteil soll weniger als 3 Vol.-%, bezogen auf das gesamte Volumen des Dämmstoffs, betragen und der Dämmstoff enthält weiterhin expandierte bzw. extrudierte Styrolpolymerisatpartikel.

Die EP 2 522 785 A2 betrifft ein Verfahren und ein System zur Innendämmung einer Gebäudeaußenwand. Bei dem beschriebenen Verfahren wird wenigstens eine kapillarinaktive diffusionsoffene Wärmedämmplatte zur Ausbildung einer Wärmedämmschicht mittels eines Klebers an der Innenseite der Gebäudeaußenwand befestigt, wobei der Kleber zugleich zur Ausbildung einer feuchtigkeitsregulierenden Zwischenschicht verwendet wird, welche in der Lage ist, Feuchtigkeit, insbesondere ausgefallenes Tauwasser, aufzunehmen, temporär zu speichern und wieder abzugeben. Das Innendämmsystem umfasst wenigstens eine kapillarinaktive diffusionsoffene Wärmedämmplatte sowie einen Kleber zur Befestigung der Wärmedämmplatte an der Innenseite der Gebäudeaußenwand, wobei der Kleber zugleich eine feuchtigkeitsregulierende Zwischenschicht ausbildet. Ferner wird die Verwendung eines Klebers zur Ausbildung einer feuchtigkeitsregulierenden Zwischenschicht in einem Innendämmsystem beschrieben.

Weiterhin betrifft die FR 2 936 583 A1 eine Platte zur Wärmedämmung und/oder zur Schallisolierung bzw. -dämmung. Die Platte zur Wärme- und/oder Schalldämmung ist aus mindestens einer starren Holz- oder Gipsplatte und einer darauf aufgebrachten wärmeisolierenden Mehrschichtstruktur, welche für Wasserdampf durchlässig ist, aufgebaut. Die Mehrschichtstruktur weist zwei reflektierende Oberflächen auf, welche durchlässig für Wasserdampf sind. Zwischen den reflektierenden Oberflächen befindet sich eine offenporige Wärmedämmstruktur.

Die DE 10 2011 113 287 A1 betrifft ein Wärmedämmmodul, welches eine erste Calciumsilikatschicht und eine zweite Calciumsilikatschicht aufweist sowie eine zwischen der ersten Calciumsilikatschicht und der zweiten Calciumsilikatschicht positionierbare Wärmedämmung. In diesem Zusammenhang ist es vorgesehen, dass die Wärmedämmung in einem Aufnahmeraum zwischen den Calciumsilikatschichten aufnehmbar ist, der durch eine Rahmenanordnung begrenzbar ist, über die die erste Calciumsilikatschicht mit der zweiten Calciumsilikatschicht verbindbar ist und die gleichfalls aus Calciumsilikat hergestellt ist.

Die US 2003/0077438 A1 betrifft ferner ein Kompositmaterial, welches 5 bis 97 Vol.-% Aerogelpartikel, mindestens ein Bindemittel und mindestens ein Fasermaterial enthält, wobei der Durchmesser der Aerogelpartikel ≥ 0,5 mm beträgt. Weiterhin werden ein Verfahren zur Herstellung des Kompositmaterials sowie seine Verwendung offenbart.

Die DE 20 2011 050 487 U1 betrifft ein Dämmstoffelement mit zwei beabstandeten Flächensubstraten, aufweisend eine zwischen ihnen angeordnete, Kräfte übertragende in Fläche verteilte Stützstruktur mit wenigstens einem Hohlraum, wobei der Hohlraum mit einer wärmedämmend optimierten Gasfüllung befüllt oder befüllbar ausgebildet und im Wesentlichen gasdicht verschlossen ist.

Weiterhin betrifft die WO 2006/076492 A1 mit nanoporösen Partikeln, insbesondere Aerogelen oder Aerosilen, gefüllte offenteilige Melaminharzschaumstoffe, ihre Herstellung und ihre Verwendung.

Die europäische Patentanmeldung EP 2 402 150 A1 betrifft schließlich ein Isolationsbauelement, welches aus mindestens einer Platte besteht, die Fasern, Aerogelpartikel und mindestens ein Bindemittel aufweist. Um ein Isolationsbauelement zu erhalten, welches einfach zu handhaben und produzieren ist sowie hervorragende Isolationseigenschaften aufweist, umfasst die Platte 20 bis 40 Gew.-% Mineralwollfasern, 45 bis 70 Gew.-% Aerogelpartikel und 8 bis 12 Gew.-% Bindemittel. Die Komponenten werden verpresst und gehärtet werden, so dass eine Platte mit einer Dichte von 130 kg/m³ bis 200 kg/m³ erhalten wird.

Aber auch mit den vorgenannten Systemen ist es bislang nicht gelungen, die prinzipiellen Nachteile der Verwendung von Aerogelen, nämlich die geringere mechanische Belastbarkeit und die daraus folgende verminderte Haltbarkeit sowie die in der Praxis deutlich reduzierte Dämmwirkung der Dämmstoffe entscheidend zu verbessern.

Der vorliegenden Erfindung liegt daher die Aufgabe zugrunde, Wärmedämmstoffsysteme zur Verfügung zu stellen, wobei die zuvor geschilderten, im Zusammenhang mit dem Stand der Technik auftretenden Probleme und Nachteile zumindest weitgehend vermieden oder aber wenigstens abgeschwächt werden sollen.

Darüber hinaus ist es eine weitere Aufgabe der vorliegenden Erfindung, Wärmedämmverbundsysteme, bereitzustellen, welche diffusionsoffen sind, gegenüber bisherigen Systemen eine deutlich verringerte Dicke aufweisen und gleichzeitig verbesserte Wärmedämmeigenschaften besitzen.

Die zuvor geschilderte Aufgabenstellung wird erfindungsgemäß durch ein Wärmedämmverbundsystem, aufweisend eine Wärmedämmplatte sowie ein Dämmputzsystem, gemäß Anspruch 1 gelöst; weitere, vorteilhafte Weiterbildungen und Ausgestaltungen der Erfindung sind Gegenstand der diesbezüglichen Unteransprüche.

Es versteht sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebene Bestimmungsverfahren oder aber mit dem Fachmann auf diesem Gebiet an sich geläufigen Bestimmungsmethoden ermittelt bzw. bestimmt werden können.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit ein Wärmedämmverbundsystem, aufweisend eine Wärmedämmplatte und ein Dämmputzsystem, wobei an einer zu dämmenden Fläche zunächst die Wärmedämmplatte angeordnet ist und nachfolgend das Dämmputzsystem, wobei das Wärmedämmverbundsystem eine Dicke von 4 bis 12 cm aufweist, wobei das Wärmedämmverbundsystem eine Wärmeleitfähigkeit im Bereich von 0,017 bis 0,040 W/(mK) aufweist,

wobei die Wärmedämmplatte mindestens ein Aerogel enthält und entlang ihrer Hauptdämmrichtung diffusionsoffen ist, wobei das Aerogel in loser Schüttung in der Wärmedämmplatte angeordnet ist und wobei die Wärmedämmplatte eine Dicke von 1 bis 8 cm aufweist,

wobei das Dämmputzsystem eine Dicke von 1 bis 5 cm aufweist, wobei das Dämmputzsystem eine ein Aerogel enthaltende Dämmputzschicht und mindestens eine weitere kein Aerogel enthaltende Dämmputzschicht aufweist, wobei die ein Aerogel enthaltende Dämmputzschicht eine Schichtdicke im Bereich von 1,5 bis 3 cm aufweist und wobei die weitere kein Aerogel enthaltende Dämmputzschicht eine Schichtdicke im Bereich von 0,2 bis 1,5 cm aufweist, wobei die Aerogel enthaltende Dämmputzschicht ein kalkbasiertes Bindemittel und ein zementbasiertes Bindemittel aufweist.

Das erfindungsgemäße Wärmedämmverbundsystem weist folglich eine Wärmedämmplatte auf, welche mindestens ein Aerogel enthält und entlang ihrer Hauptdämmrichtung diffusionsoffen ist.

Die Wärmedämmplatte erlaubt somit einen Transport von Wasserdampf vom Mauerwerk in die Umgebung. Die Hauptdämmrichtung der Wärmedämmplatte verläuft folglich senkrecht zur Hauptfläche, d. h. der größten Fläche, der Wärmedämmplatte, welche synonym auch als Flachfläche bzw. Breitfläche bezeichnet wird.

Im Rahmen der vorliegenden Erfindung ist esvorgesehen, dass das Aerogel in loser Schüttung in der Wärmedämmplatte angeordnet ist. Hierdurch kann ein besonders niedriger Wasserdampfdiffusionswiderstand erzielt werden, da kein Bindemittel die Wasserdampfdiffusion behindert.

Im Allgemeinen weist die Wärmedämmplatte ein Aerogel mit absoluten Partikelgrößen im Bereich von 1 bis 8 mm, insbesondere 2 bis 6 mm, vorzugsweise 3 bis 5 mm, auf. Die Verwendung von Aerogel mit den vorgenannten Partikelgrößen erlaubt einerseits eine besonders gute Wasserdampfdiffusion und ermöglicht gleichzeitig eine sehr effektive Dämmwirkung, wobei die Partikel robust genug sind, um Erschütterungen bei Lager und Transport, Zuschnitt und Montage der Wärmedämmplatte schadlos zu überstehen.

Was den Wasserdampfdiffusionswiderstand der Wärmedämmplatte anbelangt, so kann dieser in weiten Bereichen variieren. Es wird jedoch im Rahmen der vorliegenden Erfindung bevorzugt, wenn die Wärmedämmplatte eine Wasserdampfdiffusionswiderstandszahl µ, bestimmt nach DIN EN ISO 12542 im Bereich von 1 bis 8, insbesondere 1 bis 6, vorzugsweise 2 bis 5, aufweist.

Wärmedämmplatten aus Polymerschäumen weisen deutlich höhere Wasserdampfdiffusionswiderstandszahlen, bestimmt nach DIN EN ISO 12542, auf. So besitzen Polyurethan-Hartschäume und expandierter Polystyrolpartikelschaum µ-Werte im Bereich von 50 bis 80, während extrudierter Polystyrolpartikelschaum µ-Werte im Bereich von 80 bis 180 aufweist.

Gemäß einer bevorzugten Ausführungsform der vorliegenden Erfindung weist die Wärmedämmplatte eine Wärmeleitfähigkeit im Bereich von 0,008 bis 0,040 W/(mK), insbesondere 0,010 bis 0,035 W/(mK), vorzugsweise 0,011 bis 0,030 W/(mK), bevorzugt 0,012 bis 0,020 W/(mK), auf. Die erfindungsgemäße Wärmedämmplatte erreicht somit nahezu die äußerst niedrigen Wärmeleitfähigkeiten von reinem Aerogel.

Weiterhin wird es im Rahmen der vorliegenden Erfindung bevorzugt, wenn die Wärmedämmplatte einen zumindest im Wesentlichen quaderförmigen Aufbau besitzt. Dies erleichtert sowohl Lagerung als auch Montage der Wärmedämmplatten.

Die Wärmedämmplatte weist eine Dicke im Bereich von 1 bis 8 cm, insbesondere 2 bis 7 cm, vorzugsweise 2,5 bis 6 cm, bevorzugt 3 bis 5 cm, auf. Die Wärmedämmplatte weist somit im Vergleich zu gängigen Wärmedämmplatten auf Basis von Polystyrol bzw. Polyurethan eine deutlich verringerte Dicke auf, wobei eine Reduzierung um den Faktor 3 bis 4 möglich ist.

Gemäß einer bevorzugten Ausführungsform der vorliegenden Erfindung ist es vorgesehen, dass die Wärmedämmplatte einen Grundkörper, bestehend aus den Schmalseiten der Wärmedämmplatte und einer Innenstruktur mit Zwischenräumen, insbesondere Kavitäten, aufweist. Der Grundkörper kann dabei einstückig oder auch mehrstückig ausgebildet sein.

Bevorzugt weist die Wärmedämmplatte parallel zur Hauptdämmrichtung eine Innenstruktur mit zumindest einseitig offenen Zwischenräumen, insbesondere Kavitäten, zur Aufnahme des Aerogels auf. Hierbei kann es vorgesehen sein, dass die Zwischenräume beidseitig offen sind und sich über die ganze Dicke der Wärmedämmplatte erstrecken. Durch die Innenstruktur mit den Kavitäten zur Aufnahme des Aerogels erhält einerseits die Wärmedämmplatte eine erhöhte mechanische Stabilität, andererseits wird die lose Schüttung des Aerogels in der erfindungsgemäß eingesetzten Wärmedämmplatte in kleinere Einheiten unterteilt, wodurch bei Transport und Montage, d. h. bei Erschütterung, weniger starke Kräfte auf die Aerogelpartikel einwirken und diese somit geschont werden.

Gemäß einer bevorzugten Ausführungsform der vorliegenden Erfindung sind die Zwischenräume n-eckig, insbesondere vier- bis achteckig, vorzugsweise sechseckig, ausgebildet. Durch die Innenstruktur werden somit bevorzugt wabenförmige Hohlräume in der Wärmedämmplatte geschaffen, welche vorzugsweise senkrecht zur Diffusionsrichtung bzw. zur Hauptwärmedämmrichtung vollständig geöffnet sind.

Besonders gute Ergebnisse werden dabei im Rahmen der vorliegenden Erfindung erhalten, wenn die Öffnungen der Zwischenräume Flächeninhalte parallel zur Hauptfläche im Bereich von 1 bis 64 cm², insbesondere 3 bis 36 cm², vorzugsweise 4 bis 16 cm², aufweisen. Bevorzugt wird somit durch die Innenkonstruktion ein Raster innerhalb der Wärmedämmplatte gebildet, insbesondere durch Stege. Diese Rasterung der Wärmedämmplatte schützt einerseits - wie oben bereits erwähnt - das Aerogel, ermöglicht jedoch andererseits eine einfache Konfektionierung der Wärmedämmplatte auf der Baustelle bzw. eine Anpassung der Ausmaße der Wärmedämmplatte an Größe und Form der zu dämmenden Fläche.

Im Allgemeinen weist der Grundkörper der Wärmedämmplatte Holz, Kunststoffe bzw. mineralische Materialien auf oder besteht zumindest im Wesentlichen hieraus. Im Rahmen der vorliegenden Erfindung sind eine Vielzahl thermoplastischer oder duroplastischer Kunststoffe geeignet, den Grundkörper der Wärmedämmplatte zu bilden, insbesondere Kunststoffe auf Basis von (i) Polyolefin, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDV) oder Polyvinylidenchlorid (PVDC); (vi) Acrylnitril/Butadien/Styrol-Copolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen können zum Einsatz kommen.

Im Rahmen der vorliegenden Erfindung ist es jedoch bevorzugt, wenn der Grundkörper der Wärmedämmplatte aus mineralischen Materialien besteht, da in diesem Fall die Wärmedämmplatte die Brennbarkeit A1 oder A2 nach DIN 4102 aufweist. Gemäß einer weiteren bevorzugten Ausführungsform besteht der Grundkörper der Wärmedämmplatte zumindest im Wesentlichen aus Holz; dies hat den Vorteil, dass bei relativ geringem Gewicht eine hohe Stabilität erzielt wird und darüber hinaus eine nochmals verbesserte Durchlässigkeit für Gase, insbesondere Wasserdampf, erreicht wird.

Im Allgemeinen sind die Öffnungen der Zwischenräume, insbesondere durch einen Rieselschutz, zumindest teilweise verschlossen. In diesem Zusammenhang ist vorgesehen, dass auf den Breitflächen der Wärmedämmplatte ein diffusionsoffenes, insbesondere ein strömungsoffenes, Flächengebilde angeordnet ist, wobei es bevorzugt ist, wenn das Flächengebilde die Breitflächen der Wärmedämmplatte bedeckt. Eine zumindest teilweise oder bereichsweise Verschließung der Öffnung der Zwischenräume mit einem Rieselschutz, insbesondere mit einem Flächengebilde, verhindert zum einen ein unerwünschtes Herausfallen des Aerogels aus den Zwischenräumen der Wärmedämmplatte. Zum anderen sorgt eine nur bereichsweise Abdeckung der Öffnung für eine ungehinderte Diffusion von Wasserdampf durch die Wärmedämmplatte hindurch. Bevorzugt bedeckt das Flächengebilde die Breitfläche der Wärmedämmplatte vollflächig.

Im Rahmen der vorliegenden Erfindung wird es bevorzugt, wenn das Flächengebilde ein textiles oder mineralisches, vorzugsweise ein mineralisches, Flächengebilde, insbesondere ein Gewebe, Gewirke, Gestricke, Geflecht, Nähgewirke, Vlies und/oder ein Filz, oder ein Gitter ist. In diesem Zusammenhang wird es bevorzugt, wenn das Flächengebilde ein Gewebe mit einer Maschenweite oder einem Gitterabstand von 0,5 bis 5 mm, insbesondere 1 bis 4 mm, vorzugsweise 1,5 bis 3 mm, bevorzugt 1,7 bis 2,5 mm, ist, wobei bevorzugt ein Glasfasergewebe verwendet wird.

Die zuvor genannten Flächengebilde sind allesamt diffusionsoffen bzw. strömungsoffen und erlauben einen ungehinderten Durchtritt von Wasserdampf. Darüber hinaus dient die Verwendung eines Flächengebildes, insbesondere eines Glasfasergewebes, mit den oben genannten Maschenweiten nicht nur als Rieselschutz gegen ein unbeabsichtigtes Herausfallen des Aerogels aus den Zwischenräumen der Wärmedämmplatte, sondern ist vielmehr gleichfalls auch eine Armierung für eine auf die Wärmedämmplatte aufgetragene Beschichtung bzw. einen auf die Wärmedämmplatte aufgetragenen Putz, insbesondere einen Wärmedämmputz, wobei insbesondere bei Verwendung eines Putzes dieser zwar an dem Flächengebilde verankert werden kann, jedoch nicht in die Platte eindringt. Hierdurch verleiht die erfindungsgemäß eingesetzte Wärmedämmplatte einem Wärmedämmverbundsystem, in welches sie integriert ist, eine gesteigerte mechanische Beständigkeit.

Im Rahmen der vorliegenden Erfindung wird die Wärmedämmplatte im Allgemeinen mittels eines Klebstoffs, insbesondere mittels eines 2-Komponenten-Klebstoffs, vorzugsweise auf Methylmethacrylat-Basis bzw. Polyurethan-Basis, an der zu dämmenden Fläche angebracht. Die Verwendung von Klebstoffen hat gegenüber dem Einsatz von Dämmstoffdübeln den Vorteil, dass die Wärmedämmplatte und folglich auch ein Wärmedämmverbundsystem, in welches sie integriert ist, nicht beschädigt wird und darüber hinaus die Entstehung einer Kältebrücke durch den Dämmstoffdübel verhindert wird.

Wie zuvor ausgeführt, weist das Wärmedämmverbundsystem (WDVS) eine zuvor beschriebene Wärmedämmplatte und ein Dämmputzsystem auf. Hierbei ist es erfindungsgemäß vorgesehen, dass an einer zu dämmenden Fläche die Wärmedämmplatte angeordnet ist und nachfolgend, d. h. an der Außenseite bzw. an der der zu dämmenden Fläche abgewandten Seite der Wärmedämmplatte, das Dämmputzsystem angeordnet ist.

Bei den erfindungsgemäß eingesetzten Dämmputzsystemen handelt es sich um mehrschichtige wärmedämmende Systeme auf Basis von Putzen.

Das erfindungsgemäße Wärmedämmverbundsystem zeichnet sich insbesondere dadurch aus, dass es nur eine äußerst geringe Dicke aufweist, diffusionsoffen für Wasserdampf ist und darüber hinaus mechanisch sehr belastbar ist, wobei trotz der geringen Schichtdicke im Vergleich zu herkömmlichen Wärmedämmverbundsystemen vergleichbare oder sogar verbesserte Dämmeigenschaften erreicht werden.

Das Wärmedämmverbundsystem weist eine Dicke von 4 bis 12 cm, insbesondere 5 bis 10 cm, vorzugsweise 5,5 bis 9 cm, bevorzugt 6 bis 8 cm, auf. Die Schichtdicke ist dabei von den Standortbedingungen, wie der Beschaffenheit des Mauerwerks sowie der Umgebung, abhängig.

Durch das erfindungsgemäße Wärmedämmverbundsystem kann somit im Vergleich zu üblichen Wärmedämmverbundsystemen, welche Schichtdicken im Bereich von 18 bis 20 cm aufweisen, eine effiziente Wärmedämmung mit einer um mehr als 2/3 verringerten Dicke der Wärmedämmverbundsysteme erreicht werden. Gemäß einer bevorzugten Ausführungsform der vorliegenden Erfindung weist das Wärmedämmverbundsystem eine Wasserdampfdiffusionswiderstandszahl µ, bestimmt nach DIN EN ISO 12542, im Bereich von 4 bis 12, insbesondere 5 bis 10, vorzugsweise 6 bis 8, auf.

Weiterhin ist es im Rahmen der vorliegenden Erfindung vorgesehen, dass das Wärmedämmverbundsystem eine Wärmeleitfähigkeit im Bereich von 0,017 bis 0,040 W/(mK), vorzugsweise 0,020 bis 0,035 W/(mK), bevorzugt 0,022 bis 0,027 W/(mK), aufweist.

Besonders gute Ergebnisse werde im Rahmen der vorliegenden Erfindung erhalten, wenn spezielle Dämmputzsysteme, auf Basis von Aerogel enthaltenden Dämmputzen, wie nachfolgend beschrieben, eingesetzt werden.

Erfindungsgemäß bevorzugt eingesetzte Dämmputze sind auf Basis neuartiger Baustofftrockenmischungen erhältlich.

Nachfolgend wird eine Baustofftrockenmischung, insbesondere ein Putzmörtel, vorzugsweise zur Herstellung eines Dämmputzes beschrieben, wobei die Baustofftrockenmischung mindestens ein Aerogel enthält.

Im Rahmen der vorliegenden Erfindung wird es dabei bevorzugt, wenn das Aerogel auf Silikatbasis ausgebildet ist, insbesondere zumindest im Wesentlichen aus Siliciumdioxid besteht, vorzugsweise ein reines Siliciumdioxid-Aerogel ist.

Das Aerogel kann gegebenenfalls hydrophobiert sein, was einerseits die wasserabweisenden Eigenschaften des Dämmstoffs sowie die Herstellung des Aerogels positiv beeinflusst, andererseits jedoch die Porosität des Aerogels herabsetzt und somit die Dämmwirkung - wenngleich nur geringfügig - abschwächt. Darüber hinaus entspricht ein hydrophobiertes Aerogel nicht mehr der Brennstoffklasse A1 gemäß DIN EN 13501-1 und DIN 4102-1, sondern A2, d. h. es müssen Nachweise für die tatsächliche Nichtbrennbarkeit des Aerogels erbracht werden.

Die Hydrophobierung des Aerogels kann mit gängigen Methoden erfolgen, was dem Fachmann jedoch geläufig ist, so dass an dieser Stelle auf weitere Ausführungen verzichtet werden kann. Exemplarisch kann beispielsweise verwiesen werden auf U. K. H. Bangi, A. V. Rao und A. P. Rao "A new route for preparation of sodium-silicate-based hydrophobic silica aerogels via ambient-pressure drying", Sci. Technol. Adv. Mater. 9, 2008.

Mit der erfindungsgemäß bevorzugten Baustofftrockenmischung sind Dämmputze zugänglich, welche gegenüber herkömmlichen Aerogel enthaltenden Dämmputzen eine deutlich verbesserte mechanische Beständigkeit aufweisen.

Die Baustofftrockenmischung kann wie gängige, aerogelfreie Putzsysteme durch einfaches Anmachen mit Wasser zu einem Dämmputz verarbeitet werden, welcher sich maschinell auf Gebäudewände aufbringen lässt und sowohl allein als auch im Wärmedämmverbundsystem gegenüber dem Stand der Technik deutlich verbesserte Wärmedämmeigenschaften besitzt.

Darüber hinaus ist der ein Aerogel enthaltende Dämmputz diffusionsoffen, d. h. Feuchtigkeit aus dem Mauerwerk kann an die Umgebung abgegeben werden, wodurch die rein theoretisch erreichbaren Wärmedurchgangskoeffizienten der Dämmstoffe tatsächlich auch erreicht werden.

Im Allgemeinen enthält die Baustofftrockenmischung das Aerogel in Mengen von 1 bis 50 Gew.-%, insbesondere 2 bis 45 Gew.-%, vorzugsweise 3 bis 40 Gew.-%, bevorzugt 5 bis 35 Gew.-%, besonders bevorzugt 10 bis 30 Gew.-%, ganz besonders bevorzugt 15 bis 25 Gew.-%, bezogen auf die Baustofftrockenmischung. Insbesondere in den zuvor genannten Mengenbereichen werden besonders stabile und haltbare Dämmputze erhalten, welche gegenüber üblichen Dämmputzsystemen deutlich verbesserte Dämmeigenschaften aufweisen.

Besonders gute Ergebnisse werden im Rahmen der vorliegenden Erfindung erhalten, wenn das in der Baustofftrockenmischung enthaltende Aerogel eine Partikelgröße von 0,01 bis 10 mm, insbesondere 0,05 bis 8 mm, vorzugsweise 0,1 bis 7 mm, bevorzugt 0,2 bis 6 mm, besonders bevorzugt 0,5 bis 5 mm, ganz besonders bevorzugt 0,5 bis 4 mm, äußerst bevorzugt 0,5 bis 2 mm, aufweist. Die im Rahmen der vorliegenden Erfindung insbesondere verwendeten Aerogele mit Partikelgrößen in den zuvor genannten Bereichen besitzen einerseits im Allgemeinen eine relativ hohe mechanische Stabilität und sind andererseits besonders kompatibel zu den weiteren in der Baustofftrockenmischung vorhandenen Partikeln.

Üblicherweise weist das Aerogel eine Schüttdichte von 0,05 bis 0,30 g/cm³, insbesondere 0,08 bis 0,27 g/cm³, vorzugsweise 0,12 bis 0,25 g/cm³, bevorzugt 0,13 bis 0,22 g/cm³, besonders bevorzugt 0,14 bis 0,20 g/cm³ ganz besonders bevorzugt 0,15 bis 0,16 g/cm³, auf.

Besonders gute Ergebnisse werden im Rahmen der vorliegenden Erfindung erhalten, wenn das Aerogel absolute Porendurchmesser im Bereich von 2 bis 400 nm, insbesondere 5 bis 300 nm, vorzugweise 8 bis 200 nm, bevorzugt 10 bis 130 nm, besonders bevorzugt 10 bis 70 nm, besitzt. Aerogele, welche Porengrößen im vorgenannten Bereich besitzen, weisen einerseits eine äußerst geringe Wärmeleitfähigkeit und andererseits eine vergleichsweise hohe mechanische Stabilität auf.

Gemäß einer bevorzugten Ausführungsform der vorliegenden Erfindung ist das Aerogel unter den Auftragsbedingungen der angemachten Baustofftrockenmischung, d. h. insbesondere als Dämmputz, zumindest im Wesentlichen formstabil. Dabei wird es insbesondere bevorzugt, wenn mindestens 70 Gew.-%, vorzugsweise mindestens 80 Gew.-%, bevorzugt mindestens 90 Gew.-%, besonders bevorzugt mindestens 95 Gew.-%, der eingesetzten Aerogelpartikel unter Auftragsbedingungen formstabil bleiben. Es ist eine Besonderheit des erfindungsgemäß eingesetzten Aerogels, dass die Aerogelpartikel, insbesondere bei maschineller Auftragung speziell mit Hilfe von Putzmaschinen, bei welcher ein Druck von bis zu 7 oder 8 bar auf die Aerogelpartikel einwirkt, formstabil bleiben und nicht zerstört werden, was zu den besonders guten Wärmedämmeigenschaften bei gleichzeitig hoher mechanischer Widerstandsfähigkeit des erfindungsgemäßen Dämmputzes führt.

Mit Aerogelen, welche die vorgenannten Parameter und Eigenschaften aufweisen, kann ein mechanisch besonders widerstandsfähiger, haltbarer und ausgezeichnet wärmedämmender Dämmputz erhalten werden. Insbesondere zeigen die Aerogelpartikel bei ihrer Einarbeitung in den Putz bzw. in die Baustofftrockenmischung eine deutlich höhere mechanische Belastbarkeit und Widerstandsfähigkeit als dies bislang bei vergleichbaren Produkten des Standes der Technik der Fall ist.

Im Rahmen der vorliegenden Erfindung gleichfalls bevorzugt eingesetzte hydrophobierte Aerogele besitzen einen Kontaktwinkel mit Wasser von 110 bis 165°. Ferner kann die Wärmeleitfähigkeit derartiger bevorzugt eingesetzter hydrophobierter Aerogele im Bereich von 0,015 bis 0,032 W/(mK), insbesondere 0,019 bis 0,025 W/(mK), vorzugsweise 0,020 bis 0,022 W/(mK), liegen. Besonders gute Ergebnisse werden im Rahmen der vorliegenden Erfindung jedoch auch erhalten, wenn die Wärmeleitfähigkeit der Aerogele im Bereich von 0,015 bis 0,016 W/(mK) liegt.

Darüber hinaus kann es im Rahmen der vorliegenden Erfindung vorgesehen sein, dass die Baustofftrockenmischung außerdem mindestens einen Zuschlag enthält.

Die im Rahmen der vorliegenden Erfindung eingesetzten bzw. verwendeten Zuschläge sind dem Fachmann als solche bekannt. Unter dem Begriff "Zuschlag" sind im Rahmen der vorliegenden Erfindung insbesondere Betonzuschläge nach DIN 1045 zu verstehen. Bei den Zuschlägen handelt es sich um Füllstoffe mit Korngrößen, die für die jeweilige Bindemittelherstellung geeignet sind. Für weitergehende Informationen zu dem Begriff "Zuschlag" kann insbesondere verwiesen werden auf Römpp Chemielexikon, 10. Auflage, Georg-Thieme-Verlag, Stuttgart/New York, Band 1, 1998, Seiten 419 und 420, Stichwort: "Betonzuschlag" sowie die dort referierte Literatur, deren jeweiliger Inhalt hiermit durch Bezugnahme vollumfänglich eingeschlossen ist.

Wenn die Bautstofftrockenmischung einen Zuschlag enthält, so ist dieser im Allgemeinen ausgewählt ist aus natürlichen oder künstlichen Gesteinen, Metallen oder Gläsern. In diesem Zusammenhang werden im Rahmen der vorliegenden Erfindung besonders gute Ergebnisse erhalten, wenn der Zuschlag ein Leichtzuschlag ist, insbesondere mit einer Kornrohdichte von höchstens 2,0 kg/dm³.Hierbei hat es sich als vorteilhaft erwiesen, wenn der Leichtzuschlag ausgewählt ist aus der Gruppe von vulkanischem Gestein, Perlit, Vermiculit, Bims, Schaum- und Blähglas, Blähton, Blähschiefer, Styropor, Tuff, Blähglimmer, Lavakies, Lavasand, Schaumkunststoffen und deren Mischungen, vorzugsweise Perlit.

Gleichfalls werden im Rahmen der vorliegenden Erfindung besonders gute Ergebnisse erhalten, wenn der Leichtzuschlag Korngrößen von höchstens 4 mm, insbesondere von höchstens 3 mm, aufweist. Leichtzuschläge mit vorgenannten Partikelgrößen, insbesondere im Fall von Perlit, können mit den Aerogelpartikeln - ohne sich auf diese Theorie festlegen zu wollen - in Wechselwirkung treten, wobei das Aerogel insbesondere in den zwischen den einzelnen Perlitpartikeln vorhandenen Hohlräumen in der Baustofftrockenmischung sowie im Dämmputz eingelagert wird und dort vor mechanischer Zerstörung geschützt ist.

Wenn die Baustofftrockenmischung einen Leichtzuschlag enthält, kann es vorgesehen sein, dass die Baustofftrockenmischung den Leichtzuschlag in Mengen von 20 bis 90 Gew.-%, insbesondere 30 bis 80 Gew.-%, vorzugsweise 40 bis 75 Gew.-%, bevorzugt 45 bis 70 Gew.-%, besonders bevorzugt, 50 bis 65 Gew.-%, bezogen auf die Baustofftrockenmischung enthält.

Besonders gute Ergebnisse werden im Rahmen der vorliegenden Erfindung erhalten, wenn die Baustofftrockenmischung das Aerogel und den Leichtzuschlag in einem gewichtsbasierten Verhältnis von Aerogel zu Leichtzuschlag von 6:1 bis 1 : 50, insbesondere 5 : 1 bis 1 : 40, vorzugsweise 2 : 1 bis 1 : 25, bevorzugt 1 : 1 bis 1 : 13, besonders bevorzugt 1 : 2 bis 1 : 6, ganz besonders bevorzugt 1 : 2 bis 1 : 4, enthält.

Insbesondere in den zuvor genannten gewichtsbasierten Verhältnissen von Aerogel zu Leichtzuschlag zeigt sich, dass die Aerogelpartikel im Dämmputz, insbesondere auch bei maschinellem Auftrag, erhalten bleiben.

Im Allgemeinen enthält die Baustofftrockenmischung mindestens ein Bindemittel. Insbesondere werden besonders gute Ergebnisse erhalten, wenn die Baustofftrockenmischung das Bindemittel in Mengen von 5 bis 98 Gew.-%, insbesondere 8 bis 75 Gew.-%, vorzugsweise 10 bis 50 Gew.-%, bevorzugt 12 bis 40 Gew.-%, besonders bevorzugt 15 bis 35 Gew.-%, enthält. Die Baustofftrockenmischung sowie der Wärmedämmputz enthalten somit das Bindemittel vorzugsweise in einem eher geringen Maße, während Aerogel und Zuschlagstoffe in einem deutlich höheren Maße vorhanden sind, was zu deutlich verbesserten Wärmedämmeigenschaften führt.

Im Rahmen der vorliegenden Erfindung weist die Baustofftrockenmischung zwei unterschiedliche Bindemittel auf. Die Baustofftrockenmischung weist ein kalkbasiertes Bindemittel, insbesondere hydraulischen Kalk, und ein zementbasiertes Bindemittel, insbesondere Weißzement, auf. Mischungen der vorgenannten Bindemittel weisen ein besonders gutes Abbindeverhalten auf, besitzen eine Konsistenz und Viskosität, welche eine gute Auftragbarkeit des Dämmputzes gewährleisten und führen trotz des hohen Anteils an Zuschlagstoffen zu einer hervorragenden Endfestigkeit. Darüber hinaus hemmt der Kalkanteil durch seine hohe Alkalität zusätzlich die Bildung von Schimmel und Algen. Der Dämmputz, welcher mit der Baustofftrockenmischung erhältlich ist, ist zwar diffusionsoffen, so dass einer Schimmelbildung von vornherein entgegengewirkt wird, die Verwendung eines kalkbasierten Bindemittels unterdrückt jedoch auch die Schimmelbildung von Schimmel und Algen für den Fall, dass der Dämmputz unter ungünstigen Bedingungen aufgetragen ist.

Unter einem hydraulischen Kalk wird dabei im Rahmen der vorliegenden Erfindung eine Mischung aus gebranntem Kalk (Calciumhydroxid) mit Hydraulefaktoren, wie beispielsweise Calciumsilikaten und Calciumaluminaten oder auch Eisenoxid, verstanden. Der hydraulische Anteil des Bindemittels härtet durch Hydratation und benötigt kein Kohlendioxid zum Abbinden. Hierdurch erhält das Bindemittel eine hohe Anfangsfestigkeit, während der nicht hydraulische Teil des Kalks langsam durch Diffusion von Kohlendioxid im Dämmputz aushärtet bzw. abbindet.

Wenn die Baustofftrockenmischung ein kalkbasiertes Bindemittel enthält, so hat es sich bewährt, wenn die Baustofftrockenmischung das kalkbasierte Bindemittel in Mengen von 4 bis 97 Gew.-%, insbesondere 5 bis 75 Gew.-%, vorzugsweise 7 bis 50 Gew.-%, bevorzugt 8 bis 40 Gew.-%, besonders bevorzugt 10 bis 30 Gew.-%, ganz besonders bevorzugt 15 bis 30 Gew.-%, bezogen auf die Baustofftrockenmischung, enthält.

Gleichfalls werden gute Ergebnisse im Rahmen der vorliegenden Erfindung erhalten, wenn die Baustofftrockenmischung das zementbasierte Bindemittel in Mengen von 1 bis 20 Gew.-%, insbesondere 1 bis 15 Gew.-%, vorzugsweise 1,5 bis 12 Gew.-%, bevorzugt 1,5 bis 10 Gew.-%, besonders bevorzugt 2 bis 8 Gew.-%, ganz besonders bevorzugt 2 bis 5 Gew.-%, bezogen auf die Baustofftrockenmischung, enthält.

Gemäß einer besonderes bevorzugten Ausführungsform der vorliegenden Erfindung enthält die Baustofftrockenmischung das kalkbasierte Bindemittel und das zementbasierte Bindemittel in einem gewichtbasierten Verhältnis von kalkbasiertem Bindemittel zu zementbasiertem Bindemittel von 1 : 5 bis 30 : 1, insbesondere 1 : 2 bis 20 : 1, vorzugsweise 1 : 1 bis 15 : 1, bevorzugt 2 : 1 bis 10 : 1, besonders bevorzugt 3 : 1 bis 8 : 1, ganz besonders bevorzugt 4 : 1 bis 7 : 1.

Weiterhin kann es im Rahmen der vorliegenden Erfindung vorgesehen sein, dass die Baustofftrockenmischung mindestens ein Additiv, insbesondere mindestens ein Zusatzmittel, enthält. Hierbei kann es vorgesehen sein, dass das Additiv ausgewählt ist aus der Gruppe von Verflüssigern, Verdickern, Verzögerern, Beschleunigern, Stabilisierungsmitteln (Stabilisatoren), Rheologiestellmitteln, Zusatzmitteln zur Einstellung des Wasserrückhaltevermögens (Wasserretentionsmitteln), Dispergiermitteln, Dichtungsmitteln, Luftporenbildnern sowie deren Mischungen.

Was die Menge an Additiv in der erfindungsgemäß bevorzugt verwendeten Baustofftrockenmischung anbelangt, so kann diese in weiten Bereichen variieren. Gute Ergebnisse werden im Rahmen der vorliegenden Erfindung jedoch insbesondere dann erhalten, wenn die Baustofftrockenmischung das Additiv in Mengen von 0,01 bis 10 Gew.-%, insbesondere 0,1 bis 5 Gew.-%, vorzugsweise 0,3 bis 3 Gew.-%, bevorzugt 0,5 bis 1 Gew.-%, bezogen auf die Baustofftrockenmischung, enthält.

Im Rahmen der vorliegenden Erfindung werden insbesondere besonders gute Ergebnisse mit einer Baustofftrockenmischung erhalten, welche
(A) Aerogel in Mengen von 3 bis 40 Gew.-%, insbesondere 5 bis 35 Gew.-%, vorzugsweise 10 bis 30 Gew.-%, bevorzugt 15 bis 25 Gew.-%, bezogen auf die Baustofftrockenmischung,
(B) mindestens einen Leichtzuschlag, insbesondere Perlit, in Mengen von 30 bis 80 Gew.-%, insbesondere 40 bis 75 Gew.-%, vorzugsweise 45 bis 70 Gew.-%, bevorzugt 50 bis 65 Gew.-%, bezogen auf die Baustofftrockenmischung,
(C) mindestens ein kalkbasiertes Bindemittel, insbesondere hydraulischen Kalk, in Mengen von 7 bis 50 Gew.-%, insbesondere 8 bis 40 Gew.-%, vorzugsweise 10 bis 30 Gew.-%, bevorzugt 15 bis 30 Gew.-%, bezogen auf die Baustofftrockenmischung,
(D) mindestens ein zementbasiertes Bindemittel, insbesondere Weißzement, in Mengen von 1,5 bis 12 Gew.-%, insbesondere 1,5 bis 10 Gew.-%, vorzugsweise 2 bis 8 Gew.-%, bevorzugt 2 bis 5 Gew.-%, bezogen auf die Baustofftrockenmischung, und
(E) mindestens ein Additiv in Mengen von 0,01 bis 10 Gew.-%, insbesondere 0,1 bis 5 Gew.-%, vorzugsweise 0,3 bis 3 Gew.-%, bevorzugt 0,5 bis 1 Gew.-%, bezogen auf die Baustofftrockenmischung, enthält.

Darüber hinaus kann es im Rahmen der vorliegenden Erfindung vorgesehen sein, dass die Baustofftrockenmischung eine Schüttdichte im Bereich von 100 bis 400 kg/m³, insbesondere 150 bis 350 kg/m³, vorzugsweise 175 bis 300 kg/m³, bevorzugt 200 bis 250 kg/m³, aufweist.

Die zuvor beschriebene Baustofftrockenmischung, insbesondere der Putzmörtel, erlauben die Herstellung eines erfindungsgemäß bevorzugten Dämmputzes, insbesondere eines Wärmedämmputzes, zur Wärmedämmung von Bauwerken, insbesondere von Gebäuden.

Erfindungsgemäß bevorzugt ist ein ein Aerogel enthaltender Dämmputz, insbesondere ein Wärmedämmputz, zur Wärmedämmung von Bauwerken bzw. Gebäuden, welcher aus einer zuvor beschriebenen Baustofftrockenmischung, insbesondere einem Putzmörtel, erhältlich ist. Hierbei kann es insbesondere vorgesehen sein, dass der Dämmputz durch Anmachen mit Wasser einer zuvor beschriebenen Baustofftrockenmischung, insbesondere eines Putzmörtels, erhältlich ist.

Im Rahmen der vorliegenden Erfindung werden besonders gute Ergebnisse erhalten, wenn der Dämmputz durch Anmachen mit Wasser in Mengen von 70 bis 150 Gew.-%, insbesondere 80 bis 130 Gew.-%, vorzugsweise 90 bis 110 Gew.-%, bezogen auf die Baustofftrockenmischung, erhältlich ist. Der Dämmputz kann folglich wie ein herkömmlicher, aus dem Stand der Technik bekannter Dämmputz angemacht und auch verarbeitet werden.

Üblicherweise besitzt der ausgehärtete ein Aerogel enthaltende Dämmputz bereits ohne weitere Beschichtung eine hervorragende Barrierewirkung gegenüber flüssigem Wasser, wohingegen Wasserdampf relativ problemlos durch den ausgehärteten Dämmputz hindurch diffundieren kann. So besitzt der bevorzugt eingesetzte ausgehärtete Dämmputz üblicherweise einen Wasseraufnahmekoeffizienten w im Bereich von 1,0 bis 1,8 kg/(m² • h^{0,5}), insbesondere 1,10 bis 1,80 kg/(m² • h^{0,5}), vorzugsweise 1,20 bis 1,70 kg/(m² • h^{0,5}).

Im Allgemeinen wird der ein Aerogel enthaltende Dämmputz mittels gängiger Methoden auf die zu behandelnde Oberfläche aufgebracht, insbesondere mittels maschineller Spritzverfahren. Es ist eine Besonderheit des erfindungsgemäß eingesetzten Dämmputzes, dass er trotz seines hohen Gehalts an Aerogel mittels maschineller Spritzverfahren, insbesondere mittels Putzmaschinen auf die zu dämmende Oberfläche, insbesondere Hauswand, aufgebracht werden kann. Wie bereits zuvor ausgeführt, zeichnet sich der erfindungsgemäß bevorzugte Dämmputz dadurch aus, dass das in ihm enthaltene Aerogel unter Auftragsbedingungen, insbesondere bei maschineller Auftragung, zumindest im Wesentlichen formstabil ist, insbesondere wobei mindestens 70 Gew.-%, insbesondere mindestens 80 Gew.-%, vorzugsweise mindestens 90 Gew.-%, bevorzugt mindestens 95 Gew.-%, der eingesetzten Aerogelpartikel formstabil bleiben.

Im Rahmen der vorliegenden Erfindung wird ein ein Aerogel enthaltender Dämmputz verwendet, welcher mindestens ein Aerogel enthält und insbesondere aus einer zuvor beschriebenen Baustofftrockenmischung erhältlich ist, wobei der ausgehärtete ein Aerogel enthaltende Dämmputz eine Wärmeleitfähigkeit im Bereich von 0,02 bis 0,055 W/(mK), insbesondere 0,022 bis 0,050 W/(mK), vorzugsweise 0,024 bis 0,045 W/(mK), bevorzugt 0,026 bis 0,040 W/(mK), besonders bevorzugt 0,028 bis 0,032 W/(mK), aufweist. Der (Wärme-)Dämmputz weist somit Wärmeleitfähigkeiten auf, wie sie üblicherweise nur bei Wärmedämmverbundsystemen beobachtet werden.

Im Allgemeinen weist der ausgehärtete ein Aerogel enthaltende Dämmputz eine Druckfestigkeit von 0,4 bis 2,5 N/mm², insbesondere 0,4 bis 2,0 N/mm², vorzugsweise 0,45 bis 1,6 N/mm², bevorzugt, 0,45 bis 1,4 N/mm², auf. Der Aerogel enthaltende Dämmputz weist somit für Wärmedämmputze eine äußerst hohe Druckfestigkeit auf.

Im Rahmen der vorliegenden Erfindung wird es bevorzugt, wenn der ausgehärtete ein Aerogel enthaltende Dämmputz eine Wasserdampfdiffusionswiderstandszahl µ, bestimmt nach DIN EN ISO 12542, im Bereich von 2 bis 9, insbesondere 3 bis 7, vorzugsweise 4 bis 6, aufweist. Wie zuvor bereits erwähnt, zeichnet sich der Dämmputz dadurch aus, dass er diffusionsoffen ist und Feuchtigkeit vom Mauerwerk an die Umgebung abgegeben werden kann, was der Bildung von Schimmel und Algen entgegenwirkt und darüber hinaus die Haltbarkeit des Wärmedämmsystems erhöht.

Üblicherweise weist der ausgehärtete ein Aerogel enthaltende Dämmputz eine Trockenrohdichte im Bereich von 200 bis 350 kg/m³, insbesondere 225 bis 325 kg/m³, vorzugsweise 250 bis 300 kg/m³, auf.

Was die Schichtdicke anbelangt, mit welcher der Dämmputz auf eine Fläche, insbesondere auf eine Gebäudewand, aufgetragen wird, so kann diese in weiten Bereichen variieren. Der ausgehärtete Dämmputz kann mit einer Schichtdicke von 1 bis 14 cm, insbesondere 1 bis 8 cm, vorzugsweise 2 bis 7 cm, auf die zu dämmende Fläche, insbesondere die Innen- oder Außenfläche einer Gebäudewand, aufgebracht ist. Dabei wird es weiterhin bevorzugt, wenn der ausgehärtete Dämmputz auf die Außenfläche einer Gebäudewand aufgebracht ist, d. h. als Außendämmung eingesetzt wird. Der Auftrag des erfindungsgemäß bevorzugt verwendeten Wärmedämmputzes kann dabei insbesondere direkt auf das Mauerwerk erfolgen, oder das Mauerwerk kann vorher spezifisch vorbereitet worden sein, beispielsweise durch Aufbringung einer Grundierung. Grundierungen, welche das Mauerwerk verfestigen bzw. eine verbesserte Haftung des Putzes am Mauerwerk bewirken, sind dem Fachmann ohne Weiteres bekannt, so dass an dieser Stelle auf weitere Ausführungen verzichtet werden kann.

Was die Schichtdicke des ausgehärteten ein Aerogel enthaltenden Dämmputzes weiterhin anbelangt, so gelten die oben genannten Wertebereiche nur für eine nicht erfindungsgemäße alleinige Auftragung des Dämmputzes bzw. eines Dämmputzsystems, welches den erfindungsgemäßen Dämmputz enthält, wohingegen bei der erfindungsgemäßen Verwendung des Dämmputzes in einem Wärmedämmverbundsystem (WDVS), insbesondere in einem eine Wärmedämmplatte aufweisenden Wärmedämmverbundsystem (WDVS) nach der Erfindung, deutlich geringere Schichtdicken des bevorzugt Dämmputzes eingesetzt werden, wie nachfolgend noch ausgeführt wird.

Es ist eine Besonderheit des ein Aerogel enthaltenden Dämmputzes, dass er sowohl für den Innen- als auch für den Außenbereich angewendet werden kann, insbesondere wobei selbst bei alleiniger Verwendung des Dämmputzes bzw. eines diesen enthaltenden Dämmputzsystems im Bereich der Außendämmung hervorragende Wärmedämmergebnisse bei gleichzeitig sehr guter mechanischer Belastbarkeit erzielt werden. Der alleinige Auftrag des Wärmedämmputzes bzw. eines Dämmputzsystems empfiehlt sich beispielsweise dann, wenn die Konturen eines Gebäudes detailgetreu nachgezeichnet werden sollen. Andernfalls ist ein erfindungsgemäßes Wärmedämmverbundsystem (WDVS) vorzuziehen, da mit diesem eine noch bessere Wärmedämmung erzielt werden kann.

Im Rahmen der vorliegenden Erfindung kann es weiterhin vorgesehen sein, dass der ausgehärtete Dämmputz die Brennbarkeit A1 oder A2 gemäß DIN 4102 aufweist. Da der erfindungsgemäß bevorzugte Dämmputz vorzugsweise rein mineralisch basiert ist, ist er nicht brennbar und besitzt die Brennbarkeit A1 gemäß DIN 4102. Bei Verwendung hydrophobierter Aerogele sowie organischer Additive ist der erfindungsgemäß bevorzugte Dämmputz immer noch nicht brennbar, wofür jedoch ein Nachweis erbracht werden muss, was einer Brennbarkeit A2 gemäß DIN 4102 entspricht.

Im Rahmen der vorliegenden Erfindung werden Aerogel enthaltende Dämmputzsysteme verwendet. Erfindungsgemäß ist ein mehrschichtiges Dämmputzsystem vorgesehen, welches mindestens eine Dämmputzschicht, bestehend aus einem mindestens ein Aerogel enthaltenden Dämmputz, wie zuvor beschrieben, und einer Oberflächenbeschichtung, aufweist, wobei die Oberflächenbeschichtung zumindest an einer mit dem Dämmputzsystem versehenen Fläche, insbesondere einer Gebäudewand, abgewandten Seite der Dämmputzschicht angeordnet ist. Hierbei wird es bevorzugt, wenn die Oberflächenbeschichtung die der mit dem Dämmputzsystem versehenen Fläche abgewandte Seite der Dämmputzschicht zumindest im Wesentlichen bedeckt.

Der Auftragung der Oberflächenbeschichtung kann dabei durchgängig oder nur bereichsweise erfolgen, wobei eine durchgängige Oberflächenbeschichtung insbesondere an der Außenseite des Dämmputzsystems, d. h. an der der zu dämmenden Fläche abgewandten Seite des Dämmputzsystems, bevorzugt wird.

Im Allgemeinen ist die Oberflächenbeschichtung wasserdicht, insbesondere schlagregendicht, und/oder diffusionsoffen. Erfindungsgemäß bevorzugt eingesetzte Oberflächenbeschichtungen verhindern somit das Eindringen von flüssigem Wasser in das Dämmputzsystem, ermöglichen jedoch andererseits die Diffusion von Wasserdampf aus dem Mauerwerk in die Umgebung, wodurch das Mauerwerk konstant entfeuchtet wird.

Besonders gute Ergebnisse werden im Rahmen der vorliegenden Erfindung erhalten, wenn die Oberflächenbeschichtung eine Schichtdicke von 50 bis 400 µm, insbesondere 100 bis 300 µm, vorzugsweise 150 bis 250 µm, aufweist. Die Oberflächenbeschichtung kann dabei durch einmaliges oder wahlweise durch mehrmaliges Auftragen erzeugt werden, d. h. die Oberflächenbeschichtung kann im Rahmen der Erfindung aus mehreren Schichten bestehen, wobei jedoch die Gesamtdicke der Oberflächenbeschichtung vorzugsweise im oben angegebenen Rahmen liegt.

Als besonders geeignet haben sich Oberflächenbeschichtungen auf Polymerbasis, insbesondere auf Acrylatbasis, herausgestellt. Diese sind zwar durchlässig gegenüber Wasserdampf, dabei aber dennoch undurchlässig gegenüber flüssigem Wasser und besitzen eine ausgezeichnete Dehnfähigkeit von bis zu 150 %. Hierdurch wirken derartige Oberflächenbeschichtungen rissüberbrückend, d. h. dass bei eventuell in der Dämmung auftretenden Rissen die Oberflächenbeschichtung nicht zwangsläufig gleichfalls reißt und somit den Eintritt von Wasser in das Dämmsystem erlaubt, sondern vielmehr ihre schützende Funktion beibehält. Dies erhöht die Haltbarkeit des Dämmsystems bzw. des Dämmputzsystems beträchtlich. Besonders geeignete Acrylatdispersionen sind als wasserbasierte Dispersionen mit einem Feststoffanteil von bis 60 % erhältlich und weisen keine organischen Lösemittel auf. Derartige Acrylatdispersionen sind kommerziell erhältlich und dem Fachmann ohne Weiteres geläufig.

Weiterhin kann es im Rahmen der vorliegenden Erfindung vorgesehen sein, dass zwischen der Aerogel enthaltenden Dämmputzschicht und der Oberflächenbeschichtung mindestens eine Grundierungsschicht angeordnet ist. Die Grundierungsschicht kann gleichfalls aus einer oder mehreren Lagen bestehen und weist insbesondere eine Schichtdicke von 25 bis 100 µm, insbesondere 35 bis 75 µm, vorzugsweise 45 bis 60 µm, auf. Als Grundierung eignen sich prinzipiell sämtliche Grundierungen, welche eine verbesserte Haftung der Oberflächenbeschichtung an dem zu beschichtenden Material gewährleisten und darüber hinaus das überwiegend mineralbasierte Putzsystem verfestigen. Dem Fachmann sind derartige Grundierungssysteme bekannt und geläufig. Es ist allerdings bevorzugt, wenn die verwendete Grundierung gleichfalls diffusionsoffen ist, d. h. einer Entfeuchtung des Mauerwerks nicht entgegensteht.

Gemäß der vorliegenden Erfindung ist zwischen der ein Aerogel enthaltenden Dämmputzschicht und der Grundierungsschicht bzw. der Oberflächenbeschichtung mindestens die weitere kein Aerogel enthaltende Dämmputzschicht angeordnet. Hierbei ist es gleichfalls bevorzugt, wenn die weitere Dämmputzschicht auf der der mit dem Dämmputzsystem versehenen Fläche abgewandten Seite des ein Aerogel enthaltenden Dämmputzes angeordnet ist.

Die Verwendung des weiteren Wärmedämmputzes steigert insbesondere die mechanische Belastbarkeit, wie beispielsweise die Druckfestigkeit des gesamten Dämmputzsystems und schützt insbesondere bei außenseitiger Anordnung weiterhin den Aerogel enthaltenden Dämmputz.

Die weitere kein Aerogel enthaltende Dämmputzschicht weist eine Schichtdicke im Bereich von 0,2 bis 1,5 cm, vorzugsweise 0,3 bis 1,0 cm, bevorzugt, 0,4 bis 0,7 cm, auf. Im Rahmen der vorliegenden Erfindung wird somit die weitere Dämmputzschicht, welche kein Aerogel enthält, nur mit einer äußerst geringen Schichtdicke auf die Außenseite der ein Aerogel enthaltenden Dämmputzschicht aufgebracht, um letztere vor mechanischen Einflüssen zu schützen.

Darüber hinaus wird es im Rahmen der vorliegenden Erfindung bevorzugt, wenn die weitere Dämmputzschicht eine Wärmeleitfähigkeit im Bereich von 0,02 bis 0,12 W/(mK), insbesondere 0,03 bis 0,10 W/(mK), vorzugsweise 0,05 bis 0,09 W/(mK), bevorzugt 0,06 bis 0,08 W/(mK), aufweist.

Gleichfalls werden im Rahmen der vorliegenden Erfindung besonders gute Ergebnisse erhalten, wenn die weitere Dämmputzschicht eine Druckfestigkeit von 1,3 bis 4,0 N/mm², insbesondere 1,4 bis 3,5 N/mm², vorzugsweise 1,5 bis 3,2 N/mm², bevorzugt, 1,6 bis 3,0 N/mm², aufweist.

Im Allgemeinen weist die weitere Dämmputzschicht eine Wasserdampfdiffusionswiderstandszahl µ, bestimmt nach DIN EN ISO 12542, im Bereich von 3 bis 10, insbesondere 4 bis 8, vorzugsweise 5 bis 7, auf.

Weiterhin kann es vorgesehen sein, dass die weitere Dämmputzschicht eine Trockenrohdichte im Bereich von 200 bis 350 kg/m³, insbesondere 250 bis 325 kg/m³, vorzugsweise 290 bis 310 kg/m³, aufweist.

Durch die Verwendung der weiteren, kein Aerogel enthaltenden Dämmputzschicht können die mechanischen Eigenschaften des Dämmputzsystems verbessert werden, wobei gleichzeitig aufgrund der geringen Schichtdicke der weiteren Dämmputzschicht die Wärmedämmfähigkeit sowie der Wasserdampfdiffusionswiderstand des Dämmputzsystems nur geringfügig beeinflusst werden.

Gemäß einer bevorzugten Ausführungsform der vorliegenden Erfindung enthält die weitere Dämmputzschicht einen Leichtzuschlag. Was die Menge des Leichtzuschlags in der weiteren Dämmputzschicht anbelangt, so kann diese in weiten Bereichen variieren. Besonders gute Ergebnisse werden jedoch erhalten, wenn die weitere Dämmputzschicht einen Leichtzuschlag in Mengen von 30 bis 90 Gew.-%, insbesondere 40 bis 85 Gew.-%, vorzugsweise 50 bis 80 Gew.-%, bezogen auf den weiteren Dämmputz bzw. eine entsprechende Baustofftrockenmischung, enthält.

Darüber hinaus enthält die weitere Dämmputzschicht im Allgemeinen mindestens ein Bindemittel. Im Rahmen der vorliegenden Erfindung wird es jedoch bevorzugt, wenn die weitere Dämmputzschicht mindestens ein kalkbasiertes Bindemittel, insbesondere hydraulischen Kalk, und mindestens ein zementbasiertes Bindemittel, insbesondere Weißzement, enthält. Dabei wird es erfindungsgemäß bevorzugt, wenn die weitere Dämmputzschicht das kalkbasierte Bindemittel in Mengen von 5 bis 60 Gew.-%, insbesondere 10 bis 40 Gew.-%, vorzugsweise 10 bis 30 Gew.-%, bezogen auf den weiteren Dämmputz bzw. eine entsprechende Baustofftrockenmischung, enthält und das zementbasiertes Bindemittel in Mengen von 1 bis 15 Gew.-%, insbesondere 2 bis 10 Gew.-%, vorzugsweise 3 bis 5 Gew.-%, bezogen auf den weiteren Dämmputz bzw. eine entsprechende Baustofftrockenmischung, enthält.

Der für die weitere Dämmputzschicht verwendete Leichtzuschlag besitzt insbesondere eine Kornrohdichte von höchstens 2,0 kg/dm³ und ist insbesondere ausgewählt aus der Gruppe von vulkanischem Gestein, Perlit, Vermiculit, Bims, Schaum- und Blähglas, Blähton, Blähschiefer, Styropor, Tuff, Blähglimmer, Lavakies, Lavasand, Schaumkunststoffen und deren Mischungen, vorzugsweise Perlit, insbesondere mit Korngrößen von höchstens 3 mm, insbesondere höchstens 2 mm.

Bei den vorgenannten Gewichtsverhältnissen lassen sich zum einen sehr gute Festigkeiten und ein sehr gutes und gleichmäßiges Abbinden der weiteren Dämmputzschicht beobachten. Darüber wird auch die Haftung an der ein Aerogel enthaltenden Dämmputzschicht erhöht, da bevorzugt jeweils ähnliche Bindemittelsysteme verwendet werden.

Im Allgemeinen ist zwischen der ein Aerogel enthaltenden Dämmputzschicht und der weiteren Dämmputzschicht eine Trägerschicht angeordnet. Die Trägerschicht ist insbesondere in Form einer Armierung ausgebildet und ist vorzugsweise ein Glasfasergewebe bzw. ein Glasfasernetz. Die Verwendung einer Trägerschicht, insbesondere in Form einer Armierung, verleiht dem erfindungsgemäßen Dämmputzsystem zusätzlich weitere mechanische Belastbarkeit und vermeidet die Bildung von Rissen, da Spannungen ausgeglichen werden können. Eine Armierung erlaubt weiterhin, dass die beiden Dämmputzschichten unmittelbar miteinander in Kontakt stehen und so einen besonders innigen Verbund bilden können, wobei beide Dämmputzschichten an und in der Armierung verankert sind. Die Verwendung von Glasfasergeweben bzw. Glasfasernetzen ist besonders vorteilhaft, da diese sowohl alkaliresistent als auch nicht brennbar sind. Vorzugsweise werden Armierungen, insbesondere Glasfasergewebe, mit Maschenweiten bzw. einer Größe der Gitteröffnungen im Bereich von 16 mm² bis 400 mm², insbesondere 49 mm² bis 300 mm², vorzugsweise 100 mm² bis 200 mm², eingesetzt.

Ein erfindungsgemäß bevorzugtes Dämmputzsystem besitzt ausgehend von einer mit dem Dämmputzsystem versehenen Fläche, d. h. von Innen nach Außen, folgenden Aufbau:
Dämmputzschicht, enthaltend mindestens ein Aerogel,
Trägerschicht,
weitere Dämmputzschicht,
Grundierungsschicht und
Oberflächenbeschicht ng.

Derartige Dämmputzsysteme vereinen sowohl eine hohe Wärmedämmfähigkeit als auch eine hohe mechanische Belastbarkeit.

Vorzugsweise weist das Dämmputzsystem im Rahmen der vorliegenden Erfindung eine Wasserdampfdiffusionswiderstandszahl µ, bestimmt nach DIN EN ISO 12542, im Bereich von 4 bis 12, insbesondere 5 bis 10, vorzugsweise 6 bis 8, auf.

Darüber hinaus wird es im Rahmen der vorliegenden Erfindung bevorzugt, wenn das Dämmputzsystem die Brennbarkeit A1 oder A2 gemäß DIN 4102 aufweist. Das erfindungsgemäße Dämmputzsystem ist somit nicht brennbar und genügt folglich den höchsten Brandschutzauflagen, weshalb es problemlos auch in sensiblen Bereichen verbaut werden kann.

Im Allgemeinen weist das Dämmputzsystem eine Schichtdicke von 1,5 bis 14 cm, insbesondere 2,5 bis 9 cm, vorzugsweise 3,5 bis 8 cm, auf.

Die vorgenannten Schichtdicken bzw. Dicken des Dämmputzsystems gelten jedoch nur, wenn das Dämmputzsystem direkt auf eine Gebäudewand, insbesondere ein Mauerwerk, aufgetragen wird. Wird das Dämmputzsystem erfindungsgemäß als Teil eines Wärmedämmverbundes (WDVS) eingesetzt, so kann es deutlich geringere Schichtdicken aufweisen. Das Dämmputzsystem erlaubt somit eine effektive Wärmedämmung bei geringen Schichtdicken und einer hervorragenden mechanischen Belastbarkeit.

Bei der erfindungsgemäßen Verwendung des Dämmputzsystems in einem erfindungsgemäßen Wärmdämmverbundsystem weist die Aerogel enthaltende Dämmputzschicht eine Schichtdicke im Bereich von 1,5 bis 3 cm, bevorzugt 1,5 bis 2,5 cm, auf.

Erfindungsgemäß ist es vorgesehen, dass die weiterekein Aerogel enthaltende Dämmputzschicht eine Schichtdicke im Bereich von 0,2 bis 1,5 cm, vorzugsweise 0,3 bis 1,0 cm, bevorzugt 0,4 bis 0,7 cm, aufweist. Mit den vorgenannten Schichtdicken des Dämmputzsystems bzw. der Dämmputzschichten als Teil des erfindungsgemäßen Wärmedämmverbundsystems werden im Rahmen der vorliegenden Erfindung hervorragende Ergebnisse erhalten.

Schließlich kann das erfindungsgemäße Wärmedämmverbundsystem eine Dämmputzplatte aufweisen, welche aus einem wie zuvor beschriebenen Dämmputzsystem besteht. Das erfindungsgemäße Wärmedämmsystem ist in diesem Fall modular aufgebaut.

Die erfindungsgemäß einsetzbare Dämmputzplatte eignet sich in besonderer Weise für den Innenausbau, insbesondere für den Dachausbau, speziell für die Unter- und Zwischensparrendämmungen.

Bei der Verwendung im Innenbereich werden üblicherweise andere Grundierungen und Beschichtungen verwendet als im Bereich der Außendämmung. Dies ist jedoch dem Fachmann geläufig, so dass es hierzu keiner weiteren Ausführungen bedarf.

Was die Dicke der erfindungsgemäß einsetzbaren Dämmputzplatte anbelangt, so kann diese in weiten Bereichen variieren. Besonders gute Ergebnisse werden im Rahmen der vorliegenden Erfindung jedoch erhalten, wenn die Dämmputzplatte eine Dicke im Bereich von 1 bis 5 cm, bevorzugt 2 bis 4 cm, aufweist.

Für weitere Einzelheiten zu der Dämmputzplatte kann auf die vorangehenden Ausführungen verwiesen werden, welche in Bezug auf die Dämmputzplatte entsprechend gelten.

Weitere Vorteile, Eigenschaften, Aspekte und Merkmale der vorliegenden Erfindung ergeben sich aus der folgenden Beschreibung von in der Zeichnung dargestellten, erfindungsgemäß bevorzugten Ausführungsform.

In den Figurendarstellung zeigt:
- Fig. 1: den schematischen Aufbau einer erfindungsgemäß einsetzbaren Wärmedämmplatte 1.
- Fig. 2: eine schematische Darstellung eines erfindungsgemäßen Wärmedämmverbundsystems 6, welches an einer Gebäudewand 7 angebracht ist;
- Fig. 3: eine schematische Darstellung eines erfindungsgemäßen bevorzugten Wärmedämmverbundsystems 6, welches an einer Gebäudewand 7 angebracht ist;

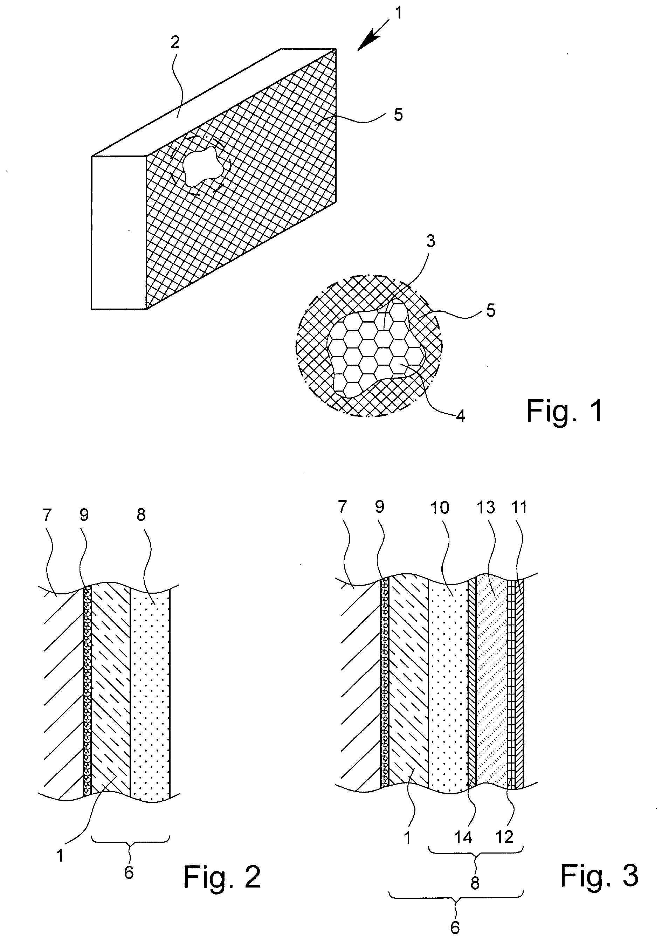

Insbesondere zeigt Fig. 1 eine bevorzugte Ausführungsform der eingesetzten Wärmedämmplatte 1. Die Wärmedämmplatte 1 besitzt einen Grundkörper, welcher aus den Schmalseiten 2 der Wärmedämmplatte sowie einer Innenstruktur 3 gebildet wird. Die Innenstruktur 3 bildet sechseckige, insbesondere wabenförmige Hohlräume 4 aus, welche sich gleichförmig über die gesamte Dicke der Wärmedämmplatte 1 erstrecken und ein Aerogel enthalten. Die Hauptflächen bzw. Breitflächen der Wärmedämmplatte 1 sind mit einem Flächengebilde 5, insbesondere mit einem Glasfasergewebe, welches eine Maschenweite von 2 x 2 mm aufweist, bedeckt, insbesondere sind die Breitflächen der Wärmedämmplatte 1 mit einem Flächengebilde bedeckt. Das Glasfasergewebe dient einerseits als Rieselschutz gegen ein unbeabsichtigtes Herausfallen des Aerogels aus den Zwischenräumen 4 der Wärmedämmplatte 1 und andererseits als Verankerung bzw. Armierung von Putzschichten, wobei die Putze nicht in das Innere der Platte, zumindest nicht wesentlich ins Innere der Platte eindringen. Fig. 2 zeigt das erfindungsgemäße Wärmedämmverbundsystem 6, welches an einer Hauswand 7 angebracht ist. Das erfindungsgemäße Wärmedämmverbundsystem 6 besteht aus der Wärmedämmplatte 1 und einem außenseitig darauf angebrachten Dämmputzsystem 8, wobei das Dämmputzsystem 8 mehrschichtig aufgebaut ist. Gleichfalls ist es möglich, dass das Dämmputzsystem 8 in Form einer Dämmputzplatte vorliegt und beispielsweise mit der Wärmedämmplatte verschraubt ist. Das Wärmedämmverbundsystem 6 ist mittels eines 2-Komponenten-Klebers 9 an der Hauswand 7 befestigt und sowohl diffusionsoffen als auch schlagregendicht ausgebildet.

Fig. 3 zeigt insbesondere eine schematische Darstellung eines erfindungsgemäß bevorzugten Wärmedämmverbundsystems 6, welches aus einer Wärmedämmplatte 1 und einem erfindungsgemäß bevorzugten Dämmputzsystem 8 besteht. Die Wärmedämmplatte 1 ist mittels eines 2-Komponenten-Klebers 9 an der Hauswand 7 befestigt. Unmittelbar auf die Wärmedämmplatte 1 in Richtung der Hauptdämmrichtung, d. h. auf die Hauptfläche bzw. Breitfläche der Wärmedämmplatte 1 aufgebracht ist das erfindungsgemäß bevorzugte Dämmputzsystem 8, wobei die mindestens ein Aerogel enthaltende Dämmputzschicht 10 unmittelbar an die Dämmputzplatte1 angrenzt. Das erfindungsgemäße Dämmputzsystem 8 weist neben der ein Aerogel enthaltenden Dämmputzschicht 10 mindestens eine Oberflächenbeschichtung 11 auf, welche schlagregenfest und diffusionsoffen ist. Zwischen der Oberflächenbeschichtung 11 und der Dämmputzschicht 10 ist eine Grundierungsschicht 12 vorgesehen, welche für eine gute Haftung zwischen der Oberflächenbeschichtung 11 und den darunterliegenden Schichten des Dämmputzsystems 8 sorgt. Zwischen der Grundierungsschicht 12 und der Dämmputzschicht 10 ist eine weitere Dämmputzschicht 13, welche kein Aerogel enthält, angeordnet und zwischen den Dämmputzschichten 10 und 13 befindet sich eine Trägerschicht 14, welche vorzugsweise aus einem Glasfasergewebe mit einer Maschenweite von 13 x 13 mm besteht. Das erfindungsgemäße Wärmedämmverbundsystems 6 ist diffusionsoffen und schlagregenfest ausgebildet.

### Ausführungsbeispiele

### 1. Herstellung einer Wärmedämmplatte

Eine plattenförmige 1 m x 0,5 m große Holzkonstruktion mit einer wabenförmigen Innenkonstruktion, welche über eine Wabenweite von 2 x 2 cm verfügt, wird einseitig mittels eines Glasfasergewebes mit einer Maschenweite von 2 x 2 mm durch Verkleben verschlossen. Die Waben der Innenkonstruktion werden mit einem grobkörnigen Aerogel mit Partikelgrößen im Bereich von 3 bis 5 mm gefüllt und auch die zweite Fläche der Grundkonstruktion wird mit einem Glasfasergewebe mit 2 x 2 mm Wabenweite durch Verkleben verschlossen. Die Dicke der Wärmedämmplatte beträgt 5 cm.

### 2. Herstellung eines Wärmedämmverbundsystems

### 2.1. Herstellung eines Aerogel enthaltenen Wärmedämmputzes

### A) Herstellung des Aerogels

Das zur Herstellung eines Aerogel enthaltenden Dämmputzes verwendete Aerogel wird in einem mehrstufigen Verfahren, umfassend die folgenden Verfahrensschritte, hergestellt:
1. Herstellung des Hydrosols
Eine kommerzielle Natrium-Silikat-Lösung wird mit deionisiertem Wasser verdünnt und anschließend durch ein stark saures Kationenaustauscherharz auf Basis von sulfoniertem und divinylbenzolvernetztem Polystyrol geleitet. Als Reaktionsprodukt wird ein Hydrosol erhalten, bei welchem die Natriumionen des Silikats fast vollständig durch Protonen ersetzt sind. Die Vollständigkeit der lonenaustauschreaktion wird durch Leitfähigkeitsmessung überprüft.
2. Herstellung eines Hydrogels
Das in Verfahrensschritt 1 erhaltene Hydrosol wird auf 50°C erwärmt und unter ständigem Rühren mit N,N-Dimethylformamid versetzt. Zur Beschleunigung der einsetzenden Kondensationsreaktion wird dem Gemisch 6 molare wässrige Ammoniaklösung zugegeben, bis die Lösung einen schwach sauren pH-Wert im Bereich von 4,2 bis 4,9 erreicht. Das Hydrosol wird zur Bildung des Gels mehrere Stunden bei konstanter Temperatur altern gelassen. Anschließend wird durch Zugabe von deionisiertem Wasser bei gleichbleibender konstanter Temperatur und Rühren das entstandene Hydrogel auf Partikelgrößen im Bereich von 0,5 bis 1 cm zerkleinert. Die das Hydrogel enthaltende Mischung wird auf 35°C abgekühlt und erneut für mehrere Stunden altern gelassen.
3. Herstellung des Alkogels
Das in Verfahrensschritt 3 erhaltene Hydrogel wird mit Methanol versetzt, bis die Volumenverhältnisse von Wasser und Methanol in etwa gleich sind. Anschließend ruht das Gel für mehrere Stunden. Nachfolgend wird aus der Reaktionsmischung ein Großteil des Lösemittels durch Filtration abgetrennt. Der verbleibende Rückstand wird anschließend wieder mit Methanol versetzt. Es vollzieht sich ein langsamer Lösemittelaustausch, bei welchem Wasser durch Methanol ersetzt wird. Die Abtrennung des Lösemittelgemisches und die Zugabe von Methanol werden gegebenenfalls wiederholt. Es entsteht ein Alkogel, welches für mehrere Stunden bei konstanter Temperatur reift.
Das abgetrennte Lösemittelgemisch wird in eine Destillationsapparatur überführt und destillativ getrennt.
4. Oberflächenmodifizierung
Das in Verfahrensschritt 3 erhaltene Alkogel wird bei konstanter Temperatur unter Rühren mit einer Lösung aus Hexamethyldisilazan und n-Hexan versetzt, wobei Salpetersäure als Katalysator verwendet wird. Nach 20 Stunden Reaktionszeit ist die Oberflächenreaktion weitgehend abgeschlossen.
5. Lösemittelaustausch
Das in Verfahrensschritt 4 erhaltene Reaktionsgemisch wird durch Filtration von einem Großteil des Lösemittels getrennt und der verbleibende Rückstand mit n-Hexan versetzt. Der Schritt wird gegebenenfalls mehrfach wiederholt. Auf diese Weise wird das Methanol weitgehend durch n-Hexan ersetzt.
Das abgetrennte Lösemittelgemisch wird in eine Destillationsapparatur überführt und destillativ getrennt.
6. Trocknung
Das verbleibende Lösemittel - hauptsächlich n-Hexan - wird durch Destillation entfernt und das noch mit Lösemittelresten benetzte Alkogelgranulat wird aus dem Reaktionsbehälter und unter Vakuum bei 50°C unter vorsichtigem Rühren und Schütteln mehrere Stunden getrocknet.
Auf diese Weise wird ein Silica-Aerogel mit folgenden Eigenschaften erhalten:

| | |
|---|---|
| Partikelgröße: | 0,5 bis 5 mm, |
| Dichte: | 0,18 bis 0,20 g/cm³, |
| Kontaktwinkel: | 110 bis 150 °, |
| Wärmeleitfähigkeit: | 0,024 bis 0,026 W/(mK), |
| Porendurchmesser: | 100 bis 300 nm, |
| Lichtdurchlässigkeit: | keine. |

Das erhaltene Aerogel wird durch Sieben in die gewünschten Größenfraktionen unterteilt.

### B) Herstellung des Dämmputzes

Ein Putzmörtel bestehend aus
Hydraulischem Kalk (21 Gewichtsteile),
Weißzement (3 Gewichtsteile),
Perlit (55 Gewichtsteile),
Aerogel, hergestellt wie zuvor beschrieben, mit Partikelgrößen im Bereich von 0,5 bis 3 mm (20 Gewichtsteile) sowie
Additiven (1 Gewichtsteil)
mit einer Schüttdichte von 250 kg/m³ wird durch Anmachen mit Wasser zu einem Dämmputz verarbeitet.

50 Liter des Putzmörtels werden mit 15 Liter Wasser angemacht, wobei 40 Liter Frischmörtel erhalten werden.

Der Aerogel enthaltende Wärmedämmputz weist eine Wärmeleitfähigkeit von 0,034 W/(mK) auf. Der Wasseraufnahmekoeffizient w liegt bei 1,24 kg/(m² •.h^{0,5}), d. h. der Putz ist wasserhemmend.

### 2.2. Aufbau und Anbringung des Wärmedämmverbundsystems

Insgesamt 9 der nach 1.) hergestellten Wärmedämmplatten werden in einer Anordnung von 3 x 3 Wärmedämmplatten, d. h. je drei Wärmedämmplatten übereinander und drei Wärmedämmplatten nebeneinander, an einer Wand mittels eines 2-Komponenten-Polyurethan-Klebstoffs angebracht. Die Verklebung erfolgt punktförmig. Anschließend wird eine 2 cm dicke Schicht des unter 2.1. hergestellten ein Aerogel enthaltenden Dämmputzes aufgetragen und anschließend mit einer Glasfaserarmierung aus einem Glasfasergewebe mit einer Maschenweite von 10 x 10 mm versehen. Nach Trocknung der Wärmedämmputzschicht wird eine weitere Wärmedämmputzschicht, welche kein Aerogel enthält, mit einer Schichtdicke von 0,5 cm aufgetragen. Bei dem weiteren Wärmedämmputz handelt es sich um einen rein mineralischen Putz auf Basis von Perlit, welcher aus einem Putzmörtel, enthaltend 50 bis 80 Vol.-% Perlit, 10 bis 30 Vol.-% Kalk, 3 bis 5 Vol.-% Zement und 0,1 Vol.-% Cellulose durch Anmachen mit Wasser erhalten wird.

Nach Trocknung der weiteren Wärmedämmputzschicht wird die Oberfläche des Wärmedämmverbundsystems mit einer Grundierung versehen. Abschließend wird eine Oberflächenbeschichtung auf Acrylatbasis in Form einer wässrigen Acrylatdispersion mit einer Trockenschichtdicke von 200 bis 300 µm aufgetragen. Die Oberflächenbeschichtung ist wasserabweisend und schlagregendicht sowie diffusionsoffen.

**Bezugszeichenliste:**

| | | | |
|---|---|---|---|
| 1 | Wärmedämmplatte | 8 | Dämmputzsystem |
| 2 | Schmalflächen der Wärmedämmplatte | 9 | Klebstoff |
| | | 10 | Dämmputzschicht, enthaltend ein Aeorgel |
| 3 | Innenstruktur der Wärmedämmplatte | | |
| | | 11 | Oberflächenbeschichtung |
| 4 | Zwischenräume | 12 | Grundierungsschicht |
| 5 | Flächengebilde | 13 | weitere Dämmputzschicht |
| 6 | Wärmedämmverbundsystem | 14 | Trägerschicht |
| 7 | Gebäudewand | | |

## Patentansprüche

1. Wärmedämmverbundsystem (6), aufweisend eine Wärmedämmplatte (1) und ein Dämmputzsystem (8), wobei an einer zu dämmenden Fläche (7) zunächst die Wärmedämmplatte (1) angeordnet ist und nachfolgend das Dämmputzsystem (8),
wobei das Wärmedämmverbundsystem (6) eine Dicke von 4 bis 12 cm aufweist, wobei das Wärmedämmverbundsystem (6) eine Wärmeleitfähigkeit im Bereich von 0,017 bis 0,040 W/(mK) aufweist,
wobei die Wärmedämmplatte (1) mindestens ein Aerogel enthält und entlang ihrer Hauptdämmrichtung diffusionsoffen ist, wobei die Wärmedämmplatte (1) eine Dicke von 1 bis 8 cm aufweist,
wobei das Dämmputzsystem (8) eine Dicke von 1 bis 5 cm aufweist, wobei das Dämmputzsystem (8) eine ein Aerogel enthaltende Dämmputzschicht (10) und mindestens eine weitere kein Aerogel enthaltende Dämmputzschicht (13) aufweist, wobei die ein Aerogel enthaltende Dämmputzschicht (10) eine Schichtdicke im Bereich von 1,5 bis 3 cm aufweist und wobei die weitere kein Aerogel enthaltende Dämmputzschicht (13) eine Schichtdicke im Bereich von 0,2 bis 1,5 cm aufweist, **dadurch gekennzeichnet, dass** das Aerogel in loser Schüttung in der Wärmedämmplatte (1) angeordnet ist und **dass** die Aerogel enthaltende Dämmputzschicht (10) ein kalkbasiertes Bindemittel und ein zementbasiertes Bindemittel aufweist.

2. Wärmedämmverbundsystem (6) nach Anspruch 1, **dadurch gekennzeichnet, dass** das Dämmputzsystem (8), eine Dicke von 1,5 bis 4 cm, bevorzugt 2 bis 3 cm, aufweist.

3. Wärmedämmverbundsystem (6) nach Anspruch 1 oder 2, **gekennzeichnet durch** folgenden Schichtaufbau:
Wärmedämmplatte (1),
Dämmputzschicht (10), enthaltend mindestens ein Aerogel,
Trägerschicht (14),
weitere Dämmputzschicht (13),
Grundierungsschicht (12) und
Oberflächenbeschichtung (11).

## Claims

1. A thermal insulation composite system (6), having a thermal insulation board (1) and an insulating plaster system (8), wherein on a surface to be insulated (7) first the thermal insulation board (1) is arranged, followed by the insulating plaster system (8),
wherein the thermal insulation composite system (6) has a thickness of 4 to 12 cm, wherein the thermal insulation composite system (6) has a thermal conductivity in the range of 0.017 to 0.040 W/(mK),
wherein the thermal insulation board (1) contains at least an aerogel and is open to diffusion along its principal insulation direction, wherein the thermal insulation board (1) has a thickness of 1 to 8 cm,
wherein the insulating plaster system (8) has a thickness of 1 to 5 cm, wherein the insulating plaster system (8) has an aerogel-containing insulating plaster layer (10) and at least one additional insulating plaster layer (13) not containing aerogel, wherein the one aerogel-containing insulating plaster layer (10) has a layer thickness in the range of 1.5 to 3 cm and wherein the additional insulating plaster layer (13) containing no aerogel has a layer thickness in the range of 0.2 to 1.5 cm, **characterised in that** the aerogel is arranged, loosely packed, in the thermal insulation board (1) and **that** the aerogel-containing thermal insulation plaster layer (10) has a lime-based binder and a cement-based binder.

2. The thermal insulation composite system (6) according to claim 1, **characterized in that** the insulating plaster system (8) has a thickness of 1.5 to 4 cm, preferably 2 to 3 cm.

3. The thermal insulation composite system (6) according to claim 1 or 2, **characterized by** the following layer structure:
Thermal insulation board (1),
Insulating plaster layer (10), containing at least an aerogel,
Supporting layer (14),
Additional insulating plaster layer (13),
Primer coat (12) and
Surface coating (11).

## Revendications

1. Système composite d'isolation thermique (6), comprenant un panneau d'isolation thermique (1) et un système d'enduit d'isolation (8), dans lequel d'abord le panneau d'isolation thermique (1), puis le système d'enduit d'isolation (8), sont disposés contre une surface (7) à isoler,
le système composite d'isolation thermique (6) présentant une épaisseur de 4 à 12 cm, le système composite d'isolation thermique (6) présentant une conductibilité thermique comprise dans la plage de 0,017 à 0,040 W/(mK), le panneau d'isolation thermique (1) contenant au moins un aérogel et étant ouvert à la diffusion dans sa direction d'isolation principale, le panneau d'isolation thermique (1) présentant une épaisseur de 1 à 8 cm,
le système d'enduit d'isolation (8) présentant une épaisseur de 1 à 5 cm, le système d'enduit d'isolation (8) présentant une couche d'enduit d'isolation (10) contenant un aérogel et au moins une autre couche d'enduit d'isolation (13) ne contenant pas d'aérogel, la couche d'enduit d'isolation (10) contenant un aérogel présentant une épaisseur de couche comprise dans la plage de 1,5 à 3 cm et l'autre couche d'enduit d'isolation (13) ne contenant pas d'aérogel présentant une épaisseur de couche comprise dans la plage de 0,2 à 1,5 cm, **caractérisé en ce que,** l'aérogel est disposé en vrac dans le panneau d'isolation thermique (1) et **en ce que** la couche d'enduit d'isolation (10) contenant un aérogel présente un liant à base de chaux et un liant à base de ciment.

2. Système composite d'isolation thermique (6) selon la revendication 1, **caractérisé en ce que** le système d'enduit d'isolation (8) présente une épaisseur de 1,5 à 4 cm, de préférence de 2 à 3 cm.

3. Système composite d'isolation thermique (6) selon la revendication 1 ou 2, **caractérisé par** la structure de couches suivante :
panneau d'isolation thermique (1),
couche d'enduit d'isolation (10), contenant au moins un aérogel,
couche support (14),
autre couche d'enduit d'isolation (13),
couche de fond (12) et
revêtement superficiel (11).
